# FASCICULE DE BREVET EUROPEEN

(11) **EP 1 691 649 B1**
(45) Date de publication et mention de la délivrance du brevet: **14.01.2009**
(21) Numéro de dépôt: 04805561.0
(22) Date de dépôt: 26.11.2004
(51) Int. Cl.: A47J 27/08

(54) **RECIPIENT DE CUISSON SOUS PRESSION POURVU D'UN COUVERCLE RENTRANT A DEFORMATION CONTROLEE ET COUVERCLE CORRESPONDANT**
MIT EINEM DURCH GESTEUERTE VERFORMUNG IN EINGRIFF BRINGBAREN DECKEL VERSEHENES DAMPFKOCHBEHÄLTNIS UND ENTSPRECHENDER DECKEL
PRESSURE-COOKING RECIPIENT PROVIDED WITH A LID ENGAGEABLE BY CONTROLLED-DEFORMATION AND A CORRESPONDING LID

(30) Priorité: 27.11.2003 FR 0313936
(43) Date de publication de la demande: 23.08.2006
(73) Titulaire: SEB S.A., 69132 Ecully Cedex (FR)
(72) Inventeur: SEURAT GUIOCHET, Claire Marie-Aurore, 21490 Bretigny (FR); ANOTA, Daniel, Jean-Marie, F-21000 Dijon (FR)
(74) Mandataire: Martin, Didier Roland Valéry
(86) Numéro de dépôt international: PCT/FR2004/003033
(87) Numéro de publication internationale: WO 2005/053479

(56) Documents cités:
- WO-A-03/064897
- BE-A- 557 473
- FR-A- 757 093
- FR-A- 2 833 476

## Description

### DOMAINE TECHNIQUE

La présente invention se rapporte au domaine technique général des récipients de cuisson d'aliments sous pression, du genre autocuiseurs, comportant une cuve et un couvercle, ainsi que des moyens de verrouillage, tels que des mâchoires se déplaçant radialement ou un étrier se déplaçant verticalement, permettant d'assurer le verrouillage du couvercle sur la cuve.

La présente invention concerne plus particulièrement un récipient de cuisson d'aliments sous pressions comprenant :
- une cuve de cuisson ainsi qu'un couvercle avec des moyens de support et des moyens de verrouillage, ladite cuve étant pourvue de moyens de réception susceptibles de coopérer avec les moyens de verrouillage, s'étendant sensiblement radialement sur le couvercle et aptes à se déplacer pour assurer le verrouillage / déverrouillage du couvercle sur la cuve.

L'invention concerne également un couvercle avec des moyens de support et des moyens de verrouillage destiné à être utilisé au sein du récipient de cuisson sous pression sus-mentionné.

### TECHNIQUE ANTERIEURE

Les récipients de cuisson d'aliments sous pression habituellement rencontrés peuvent être du type à mâchoires ou à étriers, ces éléments de verrouillage étant montés sur le couvercle afin de fermer hermétiquement la cuve par l'intermédiaire d'un joint d'étanchéité.

Un tel récipient est décrit dans le document WO-A-03/064 897.

Ces récipients comportent souvent des pièces métalliques (couvercle, moyens de verrouillage...) rigides, lourdes, robustes et épaisses offrant une bonne résistance mécanique et se déformant peu sous l'effet de la pression régnant dans la cuve.

Même si les récipients sus-mentionnés donnent généralement de bons résultats sur le plan mécanique, ils souffrent néanmoins d'inconvénients non négligeables.

De tels récipients sous pression nécessitent ainsi généralement, pour leur fabrication, une quantité de matière première importante, de telle sorte qu'ils présentent souvent un coût de fabrication élevé.

En outre, ces récipients, de même que les pièces les constituant, sont souvent lourds en raison de la quantité importante de métal utilisée, ce qui rend difficile leur manipulation par un opérateur.

### EXPOSE DE L'INVENTION

Les objets assignés à l'invention visent en conséquence à porter remède aux divers inconvénients énumérés précédemment et à proposer un nouveau récipient de cuisson sous pression qui, en offrant un meilleur contrôle de la déformation du couvercle, permet de réduire la quantité de matière utilisée pour le fabriquer.

Un autre objet de l'invention vise à proposer un nouveau récipient de cuisson sous pression présentant un aspect esthétique général satisfaisant.

Un autre objet de l'invention vise à proposer un nouveau récipient de cuisson sous pression présentant une bonne tenue mécanique d'ensemble.

Un autre objet de l'invention vise à proposer un nouveau récipient de cuisson sous pression qui soit bien équilibré sur le plan mécanique.

Les objets assignés à l'invention visent également à proposer un nouveau couvercle destiné à être utilisé au sein du récipient de cuisson sous pression sus-mentionné.

Les objets assignés à l'invention sont atteints à l'aide d'un récipient de cuisson d'aliments sous pression selon la revendication 1.

Les objets assignés à l'invention sont également atteints à l'aide d'un couvercle avec des moyens de support et des moyens de verrouillage destiné à être utilisé au sein du récipient sus-mentionné.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés à titre d'exemple illustratif et non limitatif dans lesquels :
- La figure 1 illustre, selon une vue en perspective, un récipient de cuisson sous pression conforme à l'invention.
- La figure 2 illustre, selon une vue de côté écorchée, un détail du récipient de cuisson sous pression conforme à l'invention.
- La figure 3 illustre, selon une vue de côté en coupe détaillée, l'agencement spatial relatif des pièces représentées sur la figure 2.
- La figure 4 illustre, selon une vue de côté en coupe selon la ligne A-A illustrée sur la figure 2, le positionnement spatial relatif du couvercle et de la cuve lorsque le récipient n'est pas sous pression.
- La figure 5 illustre, selon une vue de côté en coupe selon la ligne A-A illustrée sur la figure 2, le positionnement relatif du couvercle et de la cuve lorsque le récipient est sous pression.
- La figure 6 illustre, selon une vue de dessus, le couvercle destiné à être utilisé dans le récipient conforme à l'invention.

### MEILLEURE MANIERE DE REALISER L'INVENTION

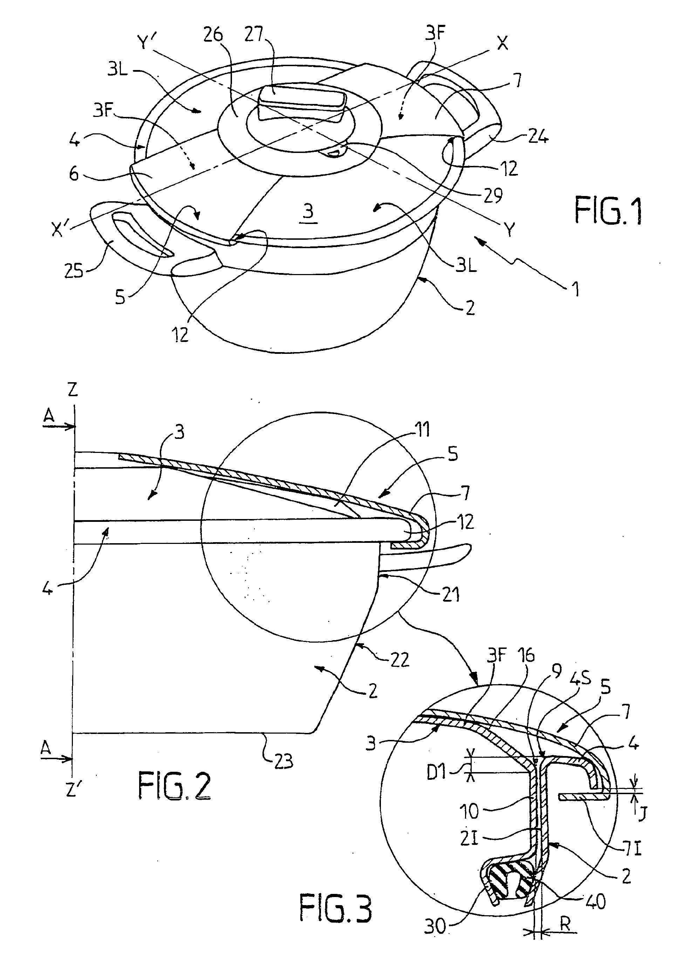

La figure 1 illustre un récipient 1 de cuisson sous pression comprenant une cuve 2 de cuisson ainsi qu'un couvercle 3.

Le récipient 1 de cuisson selon l'invention fonctionne préférentiellement à un niveau de surpression de l'ordre de 20 kPa, soit un niveau de surpression inférieur au niveau de surpression des autocuiseurs généralement rencontrés qui fonctionnent entre 55 kPa et 90 kPa. Ce mode de fonctionnement permet ainsi de retirer facilement le couvercle à tout moment pendant la cuisson et ce sans arrêter la source de chauffe.

Bien évidemment, le récipient 1 de cuisson sous pression selon l'invention pourrait également être conçu pour fonctionner à des niveaux de surpression plus élevés, par exemple compris entre 55 kPa, et 90 kPa, et ce sans sortir du cadre de l'invention.

Selon l'invention, la cuve 2 est pourvue de moyens de réception 12 susceptibles de coopérer avec des moyens de verrouillage 5, s'étendant sensiblement radialement sur le couvercle 3 et aptes à se déplacer pour assurer le verrouillage respectivement le déverrouillage du couvercle 3 sur la cuve 2.

Selon un premier mode de réalisation de l'invention, les moyens de verrouillage 5 sont avantageusement formés par des mâchoires 6, 7. La cuve 2 comporte préférentiellement un rebord 4, la ou les partie(s) dudit rebord 4 située(s) sensiblement à la verticale des mâchoires 6, 7 formant moyens de réception 12 pour les moyens de verrouillage 5 (figures 1 et 2). Les mâchoires 6, 7 viennent alors avantageusement prendre appui sur le rebord 4 pour verrouiller le couvercle.

Selon un deuxième mode de réalisation de l'invention (non représenté aux figures), les moyens de verrouillage peuvent également se présenter sous la forme d'un étrier, et ce sans sortir du cadre de l'invention. Dans ce cas, un étrier est monté mobile en translation verticale sur le couvercle avec interposition de moyens de calage entre le couvercle et l'étrier, lesdits moyens de calage assurant le maintien d'une distance prédéterminée entre le couvercle et l'étrier, garantissant l'étanchéité du récipient de cuisson. Les deux extrémités de l'étrier sont avantageusement dimensionnées pour coopérer avec des oreilles correspondantes montées sur la cuve, lesdites oreilles 2 formant moyens de réception 12 pour les extrémités de l'étrier. En manoeuvrant une poignée montée en rotation relativement au couvercle et à l'étrier, l'opérateur peut faire monter (ou descendre) ce dernier jusqu'à ce que l'étrier, par le biais de chacune des ses extrémités, vienne prendre appui sur des surfaces d'appui ménagées à cet effet sur chacune des oreilles, verrouillant ainsi le couvercle 3 sur la cuve 2. Dans ce mode de réalisation de l'invention, la cuve 2 peut également comprendre un rebord, mais ce dernier ne sert pas de moyens de réception pour les moyens de verrouillage.

La suite de la description s'applique indifféremment aux deux modes de réalisation sus-mentionnés.

Tel que cela est représenté sur la figure 1, les moyens de verrouillage 5 et par exemple les mâchoires 6, 7 s'étendent préférentiellement selon un axe principal X-X' d'extension sensiblement radial.

Selon une variante préférentielle, la cuve 2 comporte d'une part un tronçon supérieur 21 sensiblement cylindrique et d'autre part un tronçon inférieur 22 sensiblement tronconique se terminant par le fond de cuve 23 (figure 2). La cuve 2 comporte en outre une paroi interne 21 délimitant le volume interne de la cuve utilisable pour la cuisson (figure 3).

La cuve 2 comporte avantageusement deux poignées 24, 25, de préférence opposées l'une par rapport à l'autre et situées par exemple sensiblement dans l'axe principal X-X' d'extension des moyens de verrouillage 5. Les poignées 24, 25 étant indépendantes des moyens de verrouillage 5 sur le plan fonctionnel, il n'est toutefois pas nécessaire de les positionner dans le prolongement de ces derniers. Lesdites poignées 24, 25 peuvent ainsi être positionnées indifféremment sur tout le pourtour de la cuve 2.

Le récipient de cuisson comprend également un moyen de commande 26 pourvu d'une poignée de commande 27 que l'on manoeuvre en rotation afin d'entraîner, selon le premier mode de réalisation de l'invention, le déplacement radial des mâchoires 6, 7 (figure 1).

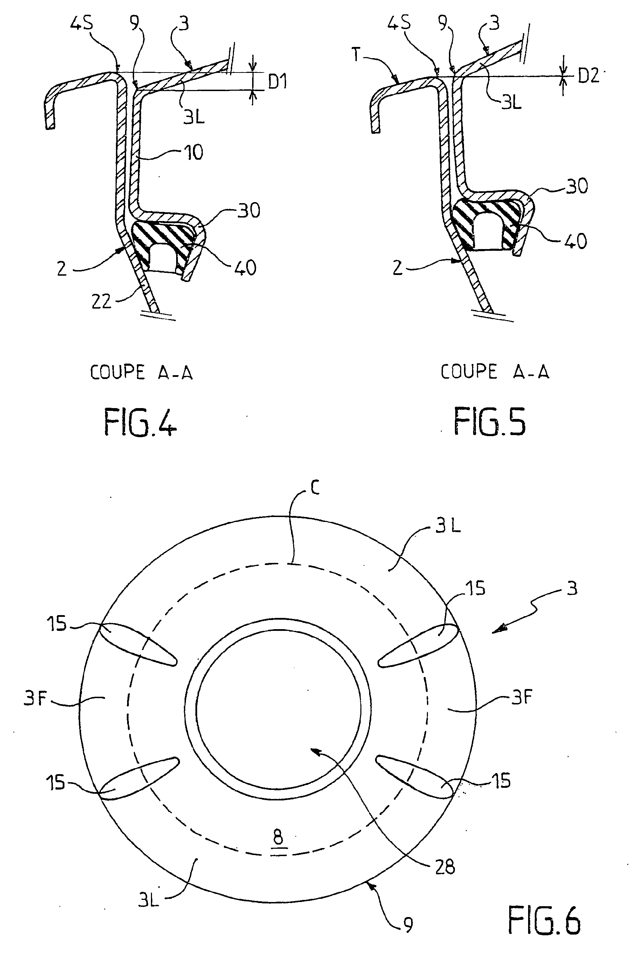

Le moyen de commande 26 est avantageusement monté dans un creux 28 formé au centre du couvercle 3 (figure 6). Il comporte en particulier un mécanisme d'actionnement (non représenté) agencé pour transformer le mouvement de rotation de la poignée de commande 27 en un mouvement de translation radial centrifuge ou centripète des mâchoires 6, 7. Le récipient 1 de cuisson conforme à l'invention comprend également un moyen d'évacuation 29 de la vapeur, du genre soupape.

Selon l'invention, le couvercle 3 et la cuve 2 sont conformés pour que lors de sa mise en place sur la cuve 2, le couvercle 3 pénètre sensiblement à l'intérieur de la cuve 2 pour former un couvercle dit rentrant (figures 3, 4 et 5).

Le couvercle 3 peut ainsi pénétrer à l'intérieur de la cuve jusqu'à ce que les moyens de verrouillage 5 viennent prendre appui sur les moyens de réception 12, et par exemple sur le rebord 4 de la cuve 2, formant ainsi également des moyens de butée pour le couvercle 3 en vue de définir sa position fixe ou de butée à l'intérieur de la cuve 2.

Le couvercle 3 comporte avantageusement une enveloppe de couverture 8 fermant l'ouverture de la cuve 2, qui définit ou se termine par un bord externe 9, par exemple annulaire lorsque le couvercle 3 est circulaire.

De façon particulièrement avantageuse, l'enveloppe de couverture 8 se prolonge latéralement par un flanc 10 qui s'étend vers le bas de manière à épouser avec un faible jeu radial R, la forme de la paroi interne 21 de la cuve 2 (figure 3).

Ainsi, selon une variante préférentielle de l'invention représentée sur la figure 3, le flanc 10 s'enfonce à l'intérieur de la cuve 2 jusqu'à ce que l'une des mâchoires 6 ou 7 vienne au contact du rebord 4 de la cuve 2.

Les moyens de verrouillage 5, et par exemple les mâchoires 6, 7, forment ainsi un moyen de butée pour le couvercle 3 lui permettant d'atteindre sa position de fermeture préalablement au verrouillage de l'appareil.

Lorsque le couvercle 3 est en position de fermeture sur la cuve 2, un jeu J est avantageusement présent entre le rebord 4 de la cuve 2 et l'extrémité rentrante 7I des mâchoires 6, 7 (figure 3).

Le jeu J permet notamment de réduire l'effort requis pour la manipulation de la poignée de commande 27 et de faciliter le verrouillage du couvercle 3.

Lorsque le récipient est mis sous pression, le couvercle 3 et les mâchoires 6, 7 associées se soulèvent sensiblement, et l'extrémité 71 des mâchoires 6, 7 vient avantageusement en appui contre le rebord 4, verrouillant ainsi encore plus sûrement le couvercle 3 sur la cuve 2. Dans cette configuration, le jeu J est avantageusement sensiblement nul.

Selon le premier et le deuxième mode de réalisation de l'invention, l'extrémité inférieure du flanc 10 du couvercle 3 comporte avantageusement un pli 30 agencé pour recevoir un joint d'étanchéité 40 (figures 3, 4 et 5). Ainsi, lorsque le couvercle 3 est mis en place sur la cuve 2, et que le flanc 10 pénètre à l'intérieur de cette dernière, le joint 40, du genre joint à lèvres, vient avantageusement s'écraser contre la paroi interne 21 du tronçon tronconique 22 de la cuve (figure 4).

Ainsi, la cuve 2, le couvercle 3 et le joint 40 sont conformés de manière à assurer l'étanchéité du récipient 1 dès lors que les moyens de verrouillage 5, et par exemple les mâchoires 6, 7, viennent en appui contre les moyens de réception 12 (par exemple contre le rebord 4 de la cuve).

Lorsque le couvercle 3 est verrouillé sur la cuve 2 et que le récipient 1 n'est pas sous pression, le couvercle 3 est maintenu dans une position de repos correspondant à la mise en contact des moyens de verrouillage 5, par exemple des mâchoires 6, 7, avec le rebord 4 de la cuve.

Selon l'invention, et tel que cela est représenté sur la figure 2 illustrant une vue de côté écorchée de la moitié du récipient 1, des moyens de support 11 sont disposés entre le couvercle 3 et les moyens de verrouillage 5, par exemple les mâchoires 6, 7, de telle sorte que lorsque le couvercle 3 est verrouillé sur la cuve 2, les moyens de verrouillage 5 viennent en appui contre les moyens de support 11.

Les moyens de support 11 sont avantageusement disposés à distance du centre du couvercle et divisent alors avantageusement le couvercle 3 en un ou plusieurs secteur(s) angulaires fixe(s) 3F maintenus par et situés sensiblement sous les moyens de verrouillage 5, par exemple les mâchoires 6, 7, et un ou plusieurs secteur(s) angulaires libre(s) 3L non maintenus par les moyens de verrouillage 5, et situés par exemple entre les mâchoires 6, 7 (figure 1).

Les moyens de verrouillage 5 viennent alors avantageusement prendre appui simultanément d'une part sur le rebord 4 de la cuve 2, et d'autre part sur les moyens de support 11, assurant ainsi une bonne tenue mécanique globale du récipient 1 (figure 2).

Selon l'invention, les moyens de support 11 et le couvercle 3 sont dimensionnés de manière à permettre une déformation du ou des secteur(s) libre(s) 3L non maintenus par les moyens de verrouillage 5 sous l'effet de la pression régnant dans la cuve 2.

Sous l'effet de ladite pression, le ou les secteur(s) fixe(s) ne peuvent pas se déformer, puisqu'ils sont maintenus fermement par les moyens de verrouillage 5 et ce, par l'intermédiaire des moyens de support 11, interposés entre le couvercle 3 et lesdits moyens de verrouillage 5. En revanche, le ou les secteur(s) libre(s) 3L, non maintenus par les moyens de verrouillage 5, sont eux susceptibles de se déformer.

Ainsi, en jouant d'une part sur le dimensionnement des moyens de support 11, en particulier sur leur hauteur, et d'autre part sur le dimensionnement du couvercle 3, notamment sur son épaisseur et sur la nature du matériau le constituant, on peut maîtriser et contrôler la déformation du ou des secteurs libres 3L du couvercle 3 relativement au bord de cuve 4.

La maîtrise et le contrôle de la déformation du couvercle autorisent alors la conception et la fabrication de couvercles présentant une épaisseur plus faible mais susceptibles de se déformer davantage que les couvercles généralement rencontrés, permettant ainsi de réduire de façon significative la quantité de matière première nécessaire et le coût des récipients de cuisson.

Selon une variante préférentielle de l'invention, le couvercle 3 est préférentiellement fabriqué à partir d'acier inoxydable et présente une épaisseur de préférence comprise entre 0,8 mm et 1,2 mm.

De façon encore plus préférentielle, l'épaisseur du couvercle 3 est sensiblement constante sur toute l'enveloppe de couverture 8 et de l'ordre de 1 mm. L'épaisseur du couvercle 3 peut bien évidemment varier en fonction du diamètre et du niveau de pression nominal du récipient.

Le rebord 4 de la cuve 2 comporte avantageusement une limite supérieure 4S (figures 3, 4 et 5). De façon particulièrement avantageuse, les moyens de support 11 sont dimensionnés pour que, lorsque le couvercle 3 est verrouillé sur la cuve 2, ils génèrent entre la partie du bord externe annulaire 9 délimitant le ou les secteur(s) libre(s) 3L et la limite supérieure 4S, un premier jeu D1 vertical prédéterminé lorsque le récipient 1 n'est pas sous pression.

En position de repos du couvercle, c'est-à-dire lorsque le récipient 1 n'est pas sous pression, le premier jeu D1 vertical s'étend sur tout le pourtour du récipient 1 entre le bord externe annulaire 9 et la limite supérieure 4S du rebord 4 de la cuve 2, et ce même sous les mâchoires 6, 7 (ou l'étrier) (figure 3).

Les moyens de support 11 sont avantageusement dimensionnés pour que lorsque le récipient 1 est sous pression, le couvercle 3 étant verrouillé sur la cuve 2, ils génèrent entre la partie du bord externe annulaire 9 délimitant le ou les secteur(s) libre(s) 3L et la limite supérieure 4S, un deuxième jeu D2 vertical différent du premier jeu D1 et inférieur à ce dernier, l'écart entre le premier jeu D1 et le deuxième jeu D2 provenant de la déformation du ou des secteur(s) libre(s) 3L sous l'effet de la pression régnant dans la cuve 2 (figures 4 et 5).

En revanche, le ou les secteur(s) fixe(s) 3F situés sous les mâchoires 6, 7 (ou l'étrier) se déformant peu sous l'effet de la pression, le jeu existant entre la partie du bord externe annulaire 9 délimitant le ou les secteur(s) fixe(s) 3F et la limite supérieure 4S est peu différent du premier jeu D1 (figure 3).

Ainsi, après la mise en route d'une source de chauffe, et lorsque le couvercle 3 est verrouillé sur la cuve 2, la pression monte progressivement à l'intérieur du récipient 1 et tend à déformer le ou les secteur(s) libre(s) 3L du couvercle de telle sorte que ces derniers, initialement situés en retrait à l'intérieur de la cuve 2, ont tendance à remonter, rapprochant ainsi le bord externe annulaire 9 du rebord 4 de la cuve 2.

Selon une variante encore plus préférentielle de l'invention, les moyens de support 11 et le couvercle 3 sont avantageusement dimensionnés pour que, lorsque le récipient 1 est soumis à une pression nominale, c'est-à-dire sa pression normale de fonctionnement (prédéterminée par exemple par le tarage d'une soupape), le deuxième jeu D2 soit sensiblement nul dans les zones du ou des secteur(s) libre(s) subissant la déformation la plus importante.

En d'autres termes, les moyens de support 11 et le couvercle 3 sont avantageusement dimensionnés et conformés pour que lorsqu'une pression nominale règne dans la cuve 2, le bord externe 9 du couvercle 3 remonte et vienne affleurer, c'est-à-dire se mette au même niveau, que le rebord 4 de la cuve.

Dans les zones de déformation maximale du couvercle, le bord externe annulaire 9 du couvercle 3 vient alors avantageusement affleurer sensiblement la limite supérieure 4S du rebord 4 de la cuve 2 (figure 5).

De façon préférentielle, la pression nominale sus-mentionnée correspond sensiblement à une surpression de l'ordre de 20 kPa dans la cuve. Bien évidemment, si la pression à l'intérieur du récipient 1 dépasse la pression de fonctionnement nominal, le bord externe annulaire 9 du couvercle 3 peut faire saillie à l'extérieur de la cuve 2 et dépasser la limite supérieure 4S.

Au contraire, l'affleurement entre la limite supérieure 4S du rebord 4 de la cuve et le bord externe annulaire 9 du couvercle 3 confère au récipient 1 un aspect esthétique particulièrement satisfaisant.

Pour améliorer encore l'aspect visuel du récipient 1 de cuisson selon l'invention, le rebord 4 de la cuve 2 comporte avantageusement une tranche supérieure T annulaire qui présente sensiblement la même courbure extérieure que l'enveloppe du couvercle 3 (figure 5).

Ainsi, lorsque le récipient 1 de cuisson est en mode de fonctionnement nominal, le couvercle 3 revient automatiquement se positionner dans le prolongement de la tranche supérieure T de la cuve 2.

Selon une variante préférentielle du premier mode de réalisation de l'invention, les moyens de verrouillage 5 sont formés par deux mâchoires 6, 7 sensiblement symétriques l'une de l'autre par rapport au centre du couvercle (situé sur l'axe de symétrie Z-Z') du récipient 1, lesdites mâchoires 6, 7 s'étendant sensiblement radialement le long de l'axe principal X-X' et diamétral (figures 1 et 2).

Les mâchoires 6, 7 sont avantageusement formées à partir d'acier inoxydable afin d'obtenir un meilleur coefficient de raideur et de conférer une meilleure rigidité audites mâchoires.

L'épaisseur des mâchoires 6, 7 est préférentiellement comprise entre 1,5 mm et 2 mm afin d'obtenir un bon compromis entre une quantité de métal utilisée la plus faible possible, et une bonne rigidité mécanique. Les mâchoires 6, 7 sont en outre préférentiellement montées en opposition l'une de l'autre afin de permettre un bon équilibrage mécanique du récipient de cuisson.

De façon préférentielle, les épaisseurs respectives des mâchoires 6, 7 et du couvercle 3 ne sont pas déterminées indépendamment l'une de l'autre, et ce afin d'obtenir une bonne tenue mécanique générale de l'autocuiseur.

Le déplacement des mâchoires 6, 7 pour verrouiller (respectivement déverrouiller) le couvercle est préférentiellement radial centripète (respectivement centrifuge).

Dans cette configuration, les zones du ou des secteur(s) libre(s) 3L subissant la déformation la plus importante lorsque le récipient est sous pression se situent le long d'un axe secondaire Y-Y' sensiblement perpendiculaire à l'axe principal X-X' d'extension des mâchoires 6, 7 (figure 1).

Le deuxième jeu D2 va donc préférentiellement sensiblement s'annuler au voisinage d'un plan médian (i.e. séparant le couvercle 3 en deux demi-couvercles) perpendiculaire à l'axe principal X-X' lorsque la pression à l'intérieur du récipient 1 est nominale.

Bien évidemment, il est également envisageable de réaliser un récipient de cuisson comprenant plus de deux mâchoires, et par exemple quatre mâchoires montées à 90° les unes des autres.

Dans ce cas, les zones de déformation les plus importantes seront situées dans un lieu géométrique équidistant de deux mâchoires successives.

Les moyens de support 11 sont avantageusement formés par des rampes d'appui 15, de forme préférentiellement oblongue afin d'offrir une meilleure surface de contact avec les moyens de verrouillage 5 (figure 6).

On peut ainsi, en contrôlant la hauteur des rampes d'appui, décider de faire affleurer ou dépasser le bord externe annulaire 9 du couvercle 3 ou encore de le maintenir en retrait par rapport à la limite supérieure 4S du rebord 4 de la cuve, lorsqu'une pression nominale de fonctionnement règne à l'intérieur de la cuve 2.

De façon préférentielle, le dimensionnement des moyens de support 11, et notamment la hauteur des rampes d'appui 15, sera déterminé en association avec les capacités de déformation du couvercle 3, de telle sorte que les effets combinés des moyens de support 11 et de la déformation du couvercle 3 conduisent, lorsque le récipient est sous une pression nominale, à l'annulation du deuxième jeu D2, et à l'affleurement du bord externe 9 du couvercle 3 par rapport au rebord 4 de la cuve.

Selon une variante préférentielle, les rampes d'appui 15 sont formées par des bossages 16 ménagés sur le couvercle 3, faisant saillie sur la surface externe du couvercle 3 sensiblement à la verticale des moyens de verrouillage 5 (figure 3). Ces bossages 16 peuvent avantageusement être obtenus par emboutissage du couvercle 3.

Bien évidemment, les rampes d'appui 15 peuvent être également formées par des pièces rapportées (non représentées aux figures) qui peuvent être soit soudées, soit encore collées ou rivetées sur le couvercle 3.

Les rampes d'appui 15 ainsi formées s'étendent préférentiellement du bord externe annulaire 9 du couvercle 3 vers le centre du couvercle (figure 6), i.e. selon une direction radiale.

Selon une variante non représentée aux figures, il est également envisageable que les rampes d'appui 15 soient formées ou montées sur les mâchoires 6, 7, lesdites rampes d'appui 15 pouvant alors avantageusement se présenter sous la forme de bossages ménagés sous les mâchoires 6, 7.

Dans la variante préférentielle de l'invention où les moyens de verrouillage 5 comportent deux mâchoires 6, 7, les moyens de support 11 sont préférentiellement formés par deux paires de rampes d'appui 15 (figure 6). Chaque paire de rampes d'appui 15 est alors avantageusement située sous une mâchoires 6, 7 correspondante. Une telle disposition assure ainsi un meilleur contact entre le couvercle 3 et les mâchoires 6, 7 et permet d'obtenir un récipient 1 de cuisson bien équilibré sur le plan mécanique.

Les rampes d'appui 15 permettent également de ménager un espace libre entre le couvercle 3 et les mâchoires 6, 7.

Les deux rampes d'appui 15 d'une même paire sont ainsi préférentiellement situées dans un même plan sensiblement perpendiculaire à l'axe de symétrie Z-Z' (figure 2) et réparties sous les mâchoires 6, 7 de façon suffisamment espacées l'une de l'autre pour permettre une meilleure répartition des efforts.

Il est bien évidemment envisageable, sans sortir du cadre de l'invention, d'augmenter encore le nombre de rampes d'appui 15 sous chaque mâchoire 6,7, ou de ne prévoir qu'une seule rampe d'appui 15 de grande largeur, sous chaque mâchoire 6, 7.

Afin d'améliorer encore la surface de contact entre les rampes d'appui 15 et les moyens de verrouillage 5, ces dernières présenteront préférentiellement une largeur suffisante de l'ordre de 15 mm, le choix de cette largeur résultant d'un compromis entre la nécessité d'obtenir un bon contact entre les mâchoires 6, 7 et les rampes d'appui 15 et le souci de réduire la quantité de matière première utilisée et de réaliser un couvercle 3 suffisamment léger.

La hauteur des rampes d'appui 15 sera préférentiellement de l'ordre de 4 mm. Bien évidemment, toutes ces dimensions ne sont données qu'à titre purement illustratif et non limitatif et d'autres valeurs pourraient être envisagées sans sortir pour autant du cadre de l'invention.

Pour améliorer encore la tenue mécanique générale du récipient 1 de cuisson selon l'invention, les deux paires de rampes d'appui 15 sont préférentiellement positionnées à distance du centre du couvercle 3, sur un même cercle fictif C dont le centre est situé sur ou au voisinage de l'axe de symétrie Z-Z' (figure 6).

Le récipient de cuisson selon l'invention permet ainsi, grâce aux moyens de support 11, de maîtriser et de contrôler la déformation du couvercle de telle sorte qu'il devient possible de réaliser des couvercles d'épaisseur réduite, nécessitant une quantité limitée de matière première pour leur fabrication, et présentant un coût réduit, tout en garantissant une bonne sécurité d'utilisation.

Un autre avantage du récipient conforme à l'invention est qu'il présente une bonne tenue mécanique d'ensemble, garantissant la sécurité de l'utilisateur.

Le fonctionnement du récipient 1 de cuisson conforme à l'invention va maintenant être décrit pour le premier mode de réalisation de l'invention, en regard des figures 1 à 6.

La mise en place du couvercle 3 sur la cuve 2 nécessite l'ouverture des mâchoires 6, 7. Pour cela, l'utilisateur tourne la poignée de commande 27 centrale de manière à provoquer un déplacement radial centrifuge des mâchoires 6, 7. Après avoir mis le couvercle 3 en position sur la cuve 2, et avoir introduit le flanc 10 du couvercle 3 à l'intérieur de la cuve 2, jusqu'à la mise en contact des mâchoires 6, 7 avec le rebord 4 de la cuve, les mâchoires 6, 7 doivent être verrouillées.

Pour cela, l'utilisateur actionne la poignée de commande 27 dans un sens de rotation opposé au sens correspondant à l'ouverture, de manière à provoquer le déplacement radial centripète des mâchoires 6, 7 jusqu'à ce que ces dernières viennent mordre le rebord 4 de la cuve 2. Une fois verrouillé, le récipient 1 de cuisson peut être positionné sur une source de chauffe de manière à générer une augmentation de la pression régnant dans la cuve. La montée en pression du récipient 1 de cuisson s'accompagne d'une déformation sensible du ou des secteur(s) libre(s) 3L, et par exemple des deux secteur(s) libre(s) 3L situés entre les mâchoires 6, 7.

Lorsque le récipient de cuisson a atteint sa pression nominale de fonctionnement, correspondant par exemple à une surpression de l'ordre de 20 kPa à l'intérieur de la cuve, le deuxième jeu D2 tend à s'annuler dans les zones de déformation maximale du couvercle, situées au voisinage du plan perpendiculaire à l'axe principal X-X' d'extension des mâchoires 6, 7.

En revanche, le jeu entre le bord externe annulaire 9 délimitant le ou les secteur(s) fixe(s) 3F du couvercle 2 et la limite supérieure 4S du rebord 4 de la cuve reste sensiblement identique au premier jeu D1 correspondant à la position de repos du couvercle 3 lorsque le récipient n'est pas sous pression.

La pression nominale de fonctionnement est maintenue sensiblement constante à l'aide du moyen d'évacuation 29 de la vapeur. Lorsque la source de chauffe est arrêtée et que la vapeur contenue à l'intérieur du récipient est évacuée et la surpression annulée, le couvercle 3 reprend sa position de repos et l'on retrouve le premier jeu D1 entre le bord externe annulaire 9 du couvercle 2 et la limite supérieure 4S du rebord 4 de la cuve, et ce sur sensiblement tout le pourtour du couvercle 2.

### POSSIBILITE D'APPLICATION INDUSTRIELLE

L'invention trouve son application industrielle dans la conception et la fabrication d'appareils domestiques de cuisson sous pression, notamment d'autocuiseurs.

## Revendications

1. Récipient (1) de cuisson d'aliments sous pression comprenant :
- une cuve (2) de cuisson ainsi qu'un couvercle (3) avec des moyens de support (11) et des moyens de verrouillage (5), ladite cuve (2) étant pourvue de moyens de réception (12) susceptibles de coopérer avec les moyens de verrouillage (5), s'étendant sensiblement radialement sur le couvercle (3) et aptes à se déplacer pour assurer le verrouillage / déverrouillage du couvercle (3) sur la cuve (2), **caractérisé en ce que** : lesdits moyens de support (11) sont disposés entre le couvercle (3) et les moyens de verrouillage (5) de telle sorte que lorsque le couvercle (3) est verrouillé sur la cuve, les moyens de verrouillage (5) viennent en appui contre les moyens de support (11), ledit récipient est tel que :
- d'une part, le couvercle (3) et la cuve (2) sont conformés pour que, lors de sa mise en place sur la cuve (2), le couvercle (3) pénètre sensiblement à l'intérieur de la cuve (2) pour former un couvercle dit rentrant, et ce jusqu'à ce que les moyens de verrouillage (5) viennent prendre appui sur les moyens de réception (12), formant ainsi des moyens de butée pour le couvercle (3),
- d'autre part, les moyens de support (11) divisent le couvercle (3) en un ou plusieurs secteur(s) angulaire(s) fixe(s) (3F), maintenus par les moyens de verrouillage (5), et un ou plusieurs secteur(s) angulaire(s) libre(s) (3L), non maintenus par les moyens de verrouillage (5), lesdits moyens de support (11) et le couvercle (3) étant dimensionnés de manière à permettre une déformation contrôlée du ou des secteur(s) libre(s) (3L) du couvercle (3) sous l'effet de la pression régnant dans la cuve (2).

2. Récipient selon la revendication 1 **caractérisé en ce que** l'enveloppe de couverture (8) du couvercle (3) définit un bord externe (9), et la cuve (2) comprend un rebord (4) comportant une limite supérieure (4S), les moyens de support (11) étant dimensionnés pour que lorsque le couvercle (3) est verrouillé sur la cuve (2), ils génèrent entre la partie du bord externe (9) délimitant le ou les secteur(s) libre(s) (3L) et ladite limite supérieure (4S) un premier jeu (D1) vertical prédéterminé lorsque le récipient (1) n'est pas sous pression et un deuxième jeu (D2) vertical différent du premier jeu (D1) lorsque le récipient est sous pression, l'écart entre le premier jeu (D1) et le deuxième jeu (D2) provenant de la déformation du ou des secteur(s) libre(s) (3L) sous l'effet de la pression régnant dans la cuve.

3. Récipient selon la revendication 2 **caractérisé en ce que** les moyens de support (11) et le couvercle (3) sont dimensionnés pour que, lorsque le récipient (1) est soumis à une pression nominale, le deuxième jeu (D2) soit sensiblement nul dans les zones du ou des secteur(s) libre(s) (3L) subissant la déformation la plus importante, le bord externe (9) venant alors sensiblement affleurer la limite supérieure (4S) du rebord (4) de la cuve (2).

4. Récipient selon l'une quelconque des revendications 1 à 3 **caractérisé en ce que** les moyens de support (11) sont formés par des rampes d'appui (15).

5. Récipient selon la revendication 4 **caractérisé en ce que** les rampes d'appui (15) sont formées par des bossages (16) ménagés sur le couvercle (3), sensiblement à la verticale des moyens de verrouillage (5).

6. Récipient selon la revendication 4 **caractérisé en ce que** les rampes d'appui (15) sont formées par des pièces rapportées, par exemple soudées sur le couvercle (3).

7. Récipient selon l'une quelconque des revendications 1 à 6 **caractérisé en ce que** les moyens de verrouillage (5) sont formés par deux mâchoires (6, 7) sensiblement symétriques l'une de l'autre par rapport au centre du couvercle, lesdites mâchoires (6, 7) s'étendant sensiblement radialement.

8. Récipient selon la revendication 2 et la revendication 7 **caractérisé en ce que** les moyens de réception (12) sont formés par la ou les partie(s) du rebord (4) de la cuve (2) située sensiblement à la verticale des mâchoires (6, 7), ces dernières venant prendre appui sur le rebord (4) pour verrouiller le couvercle (3).

9. Récipient selon l'une des revendications 4 à 6 et la revendication 8 **caractérisé en ce que** les moyens de support (11) sont formés par deux paires de rampes d'appui (15), chaque paire de rampes d'appui (15) étant située sous une mâchoire (6, 7) correspondante.

10. Récipient selon la revendication 9 **caractérisé en ce que** les deux paires de rampes d'appui (15) sont positionnées sur un même cercle fictif (C).

11. Récipient selon l'une quelconque des revendications 1 à 6 **caractérisé en ce que** les moyens de verrouillage (5) sont formés par un étrier susceptible de coopérer avec des oreilles correspondantes montées sur la cuve (2), lesdites oreilles formant moyens de réception (12) pour les moyens de verrouillage (5).

12. Récipient selon la revendication 2 et l'une des revendications 3 à 11 **caractérisé en ce que** l'enveloppe de couverture (8) du couvercle (3) se prolonge latéralement par un flanc (10) qui s'étend vers le bas de manière à épouser avec un faible jeu radial (R) la forme de la paroi interne (21) de la cuve.

13. Récipient selon la revendication 12 **caractérisé en ce que** l'extrémité inférieure du flanc (10) du couvercle (3) comporte un pli (30) agencé pour recevoir un joint d'étanchéité (40).

14. Récipient selon la revendication 2 **caractérisé en ce que** le rebord (4) de cuve (2) comporte une tranche supérieure (T) annulaire présentant sensiblement la même courbure extérieure que le couvercle (3).

15. Couvercle (3) avec des moyens de support (11) et des moyens de verrouillage (5) destiné à être utilisé au sein du récipient 1 conforme à l'objet de l'une des revendications 1 à 14.

## Claims

1. Cooking vessel (1) for cooking food under pressure, comprising:
- a cooking bowl (2) and a lid (3) with support means (11) and locking means (5), said bowl (2) being provided with receiving means (12) which are able to cooperate with the locking means (5), extending substantially radially over the lid (3) and capable of being displaced so as to lock/unlock the lid (3) onto/from the bowl (2), **characterised in that**
- said support means (11) are arranged between the lid (3) and the locking means (5) so that, when the lid (3) is locked onto the bowl, the locking means (5) come to bear against the support means (11), said vessel is such that:
- on the one hand, the lid (3) and the bowl (2) are shaped so that, when it is placed onto the bowl (2), the lid (3) penetrates substantially into the interior of the bowl (2) so as to form a so-called insertable lid, until the locking means (5) come to bear against the receiving means (12), thus forming stop means for the lid (3),
- on the other hand, the support means (11) divide the lid (3) into one or more fixed angular sector(s) (3F) which are held by the locking means (5), and one or more free angular sector(s) (3L) which are not held by the locking means (5), said support means (11) and the lid (3) being dimensioned so as to allow a controlled deformation of the free sector(s) (3L) of the lid (3) under the effect of the pressure prevailing in the bowl (2).

2. Vessel according to claim 1, **characterised in that** the covering shell (8) of the lid (3) defines an outer edge (9), and the bowl (2) comprises a rim (4) having an upper limit (4S), the support means (11) being dimensioned so that, when the lid (3) is locked onto the bowl (2), they generate between the part of the outer edge (9) delimiting the free sector(s) (3L) and said upper limit (4S) a first predetermined vertical clearance (D1) when the vessel (1) is not pressurised, and a second vertical clearance (D2), different from the first clearance (D1), when the vessel is pressurised, the difference between the first clearance (D1) and the second clearance (D2) arising from the deformation of the free sector(s) (3L) under the effect of the pressure prevailing in the bowl.

3. Vessel according to claim 2, **characterised in that** the support means (11) and the lid (3) are dimensioned so that, when the vessel (1) is subjected to a nominal pressure, the second clearance (D2) is substantially zero in the zones of the free sector(s) (3L) undergoing the greatest deformation, the outer edge (9) then aligning substantially flush with the upper limit (4S) of the rim (4) of the bowl (2).

4. Vessel according to any one of claims 1 to 3, **characterised in that** the support means (11) are formed by bearing ramps (15).

5. Vessel according to claim 4, **characterised in that** the bearing ramps (15) are formed by protrusions (16) provided on the lid (3), substantially in vertical alignment with the locking means (5).

6. Vessel according to claim 4, **characterised in that** the bearing ramps (15) are formed by parts which are attached, for example welded, to the lid (3).

7. Vessel according to any one of claims 1 to 6, **characterised in that** the locking means (5) are formed by two jaws (6, 7) which are substantially symmetrical to one another with respect to the centre of the lid, said jaws (6, 7) extending substantially radially.

8. Vessel according to claim 2 and claim 7, **characterised in that** the receiving means (12) are formed by the part(s) of the rim (4) of the bowl (2) which are located substantially in vertical alignment with the jaws (6, 7), the latter coming to bear against the rim (4) in order to lock the lid (3).

9. Vessel according to one of claims 4 to 6 and claim 8, **characterised in that** the support means (11) are formed by two pairs of bearing ramps (15), each pair of bearing ramps (15) being located below a corresponding jaw (6, 7).

10. Vessel according to claim 9, **characterised in that** the two pairs of bearing ramps (15) are positioned on the same imaginary circle (C).

11. Vessel according to any one of claims 1 to 6, **characterised in that** the locking means (5) are formed by a clip which is able to cooperate with corresponding lugs mounted on the bowl (2), said lugs forming receiving means (12) for the locking means (5).

12. Vessel according to claim 2 and one of claims 3 to 11, **characterised in that** the covering shell (8) of the lid (3) is prolonged laterally by a flank (10) which extends downwards so as to mate with the shape of the inner wall (21) of the bowl with a small radial clearance (R).

13. Vessel according to claim 12, **characterised in that** the lower end of the flank (10) of the lid (3) comprises a fold (30) which is designed to receive a seal (40).

14. Vessel according to claim 2, **characterised in that** the rim (4) of the bowl (2) comprises an annular upper edge (T) having substantially the same external curvature as the lid (3).

15. Lid (3) with support means (11) and locking means (5) designed to be used within the vessel 1 according to the subject matter of one of claims 1 to 14.

## Patentansprüche

1. Behältnis (1) zum Kochen von Nahrungsmitteln, umfassend:
- ein Kochgefäß (2) sowie einen Deckel (3) mit TrägermiLLeln (11) und Verschlussmitteln (5), wobei das Gefäß (2) mit Aufnahmemitteln (12) versehen ist, die dazu geeignet sind, mit den Verschlussmitteln (5) zusammenzuwirken, die sich im Wesentlichen radial auf dem Deckel (3) erstrecken und dazu geeignet sind, sich zu verschieben, um den Verschluss / die Öffnung des Deckels (3) auf dem Gefäß sicherzustellen, **dadurch gekennzeichnet, dass**:
die Trägermittel (11) zwischen dem Deckel (3) und den Verschlussmitteln (5) so angebracht sind, dass, wenn der Deckel (3) auf dem Gefäß verschlossen ist, die Verschlussmittel (5) gegen die Trägermittel (11) aufliegen, wobei des Behältnis derart ist, dass:
- einerseils der Deckel (3) und das Gefäß (2) aneinander angepasst sind, damit der Deckel (3) bei seiner Anbringung auf dem Gefäß (2) im Wesentlichen in das Innere des Gefäßes (2) eindringt, um einen als einspringend bezeichneten Deckel zu bilden, und dies, bis die Verschlussmittel (5) auf den Aufnahmemittel (12) aufliegen und so Anschlagmittel für den Deckel (3) bilden,
- andererseits die Trägermittel (11) den Deckel (3) in einen oder mehrere feste Winkelsektoren (3F) unterteilen, die von den Verschlussmitteln (5) gehalten werden, und einen oder mehrere freie Winkelsektoren (3L), die nicht von den Verschlussmitteln (5) gehalten werden, wobei die Trägermittel (11) und der Deckel (3) so dimensioniert sind, dass sie eine kontrollierte Verformung des oder der freien Abschnitte (3L) des Deckels (3) unter dem Einfluss des Drucks, der im Gefäß (2) herrscht, ermöglichten.

2. BehälLnis nach Anspruch 1, **dadurch gekennzeichnet, dass** die Verkleidung (8) des Deckels (3) einen äußeren Rand (9) definiert, und dass das Gefäß (2) einen Vorsprung (4) umfasst, der eine obere Grenze (4S) aufweist, wobei die Trägermittel (11) so dimensioniert sind, dass, wenn der Deckel (3) auf dem Gefäß (2) verschlossen ist, sie zwischen dem Teil des externen Randes (9), der den oder die freien Sektoren (3L) begrenzt, und der oberen Grenze (4S) ein erstes vorbestimmtes vertikales Spiel (D1) erzeugen, wenn das Behältnis (1) nicht unter Druck steht, und ein zweites vertikales Spiel (D2) erzeugen, das sich vom ersten Spiel (D1) unterscheidet, wenn das Gefäß unter Druck steht, wobei sich der Unterschied zwischen dem ersten Spiel (D1) und dem zweiten Spiel (D2) aus der Verformung des oder der freien Sektoren (3L) unter der Einwirkung des Drucks, der im Gefäß herrscht, ergibt.

3. Behältnis nach Anspruch 2, **dadurch gekennzeichnet, dass** die Trägermittel (11) und der Deckel (3) so dimensioniert sind, dass, wenn das Behältnis (1) einem Nominaldruck ausgesetzt wird, das zweite Spiel (D2) in den Bereichen des oder der freien Sektoren (3L), die der stärksten Verformung ausgesetzt sind, im Wesentlichen gleich null ist, wobei der äußere Rand (9) dann im Wesentlichen mit der oberen Grenze (4S) des Vorsprungs (4) des Gefäßes (2) bündig abschließt.

4. Behältnis nach einem der Ansprüche 1 bis 3, **dadurch gekennzeichnet, dass** die Trägermittel (11) durch Stützrampen (15) gebildet sind.

5. Behältnis nach Anspruch 4, **dadurch gekennzeichnet, dass** die Stützrampen (15) aus Erhebungen (16) gebildet sind, die auf dem Deckel (3) im Wesentlichen vertikal zu den Verschlussmitteln (5) angebracht sind.

6. Behältnis nach Anspruch 4, **dadurch gekennzeichnet, dass** die Stützrampen (15) aus aufgesetzten Stücken gebildet sind, die auf dem Deckel (3) angebracht, z.B. geschweißt sind.

7. Behältnis nach einem der Ansprüche 1 bis 6, **dadurch gekennzeichnet, dass** die Verschlussmittel (5) aus zwei Backen (6, 7) gebildet sind, die hinsichtlich des Mittelpunktes des Deckels im Wesentlichen symmetrisch zueinander sind, wobei sich die Backen (6, 7) im Wesentlichen radial erstrecken.

8. Behältnis nach Anspruch 2 und Anspruch 7, **dadurch gekennzeichnet, dass** die Aufnahmemittel (12) durch den oder die Teile des Vorsprungs (4) des Gefäßes (2) gebildet sind, die im Wesentlichen vertikal zu den Backen (6, 7) angeordnet sind, wobei Letztere auf dem Vorsprung (4) aufliegen, um den Deckel (3) zu verschließen.

9. Behältnis nach einem der Ansprüche 4 bis 6 und Anspruch 8, **dadurch gekennzeichnet, dass** die Trägermittel (11) aus zwei Paar Stützrampen (15) gebildet sind, wobei jedes Paar Stützrampen (15) unter einer entsprechenden Backe (6, 7) angebracht ist.

10. Behältnis nach Anspruch 9, **dadurch gekennzeichnet, dass** die zwei Paar Stützrampen (15) auf einem gleichen gedachten Kreis (C) angeordnet sind.

11. Behältnis nach einem der Ansprüche 1 bis 6, **dadurch gekennzeichnet, dass** die Verschlussmittel (5) aus einem Bügel gebildet sind, der dazu geeignet ist, mit den entsprechenden Ösen zusammenzuwirken, die auf dem Gefäß (2) montiert sind, wobei die Ösen Aufnahmemittel (12) für die Verschlussmittel (5) bildern.

12. Behältnis nach Anspruch 2 und einem der Ansprüche 3 bis 11, **dadurch gekennzeichnet, dass** die Verkleidung (8) des Deckels (3) sich seitlich über eine Flanke (10) ausdehnt, die sich so nach unten erstreckt, dass sie mit einem leichten radialen Spiel (R) an der Form der Innenwand (21) des Behältnisses anliegt.

13. Behältnis nach Anspruch 12, **dadurch gekennzeichnet, dass** das untere Ende der Flanke (10) des Deckels (3) einen Falz (30) umfasst, der angeordnet ist, um eine Dichtung (40) aufzunehmen.

14. Behältnis nach Anspruch 2, **dadurch gekennzeichnet, dass** der Vorsprung (4) des Gefäßes (2) einen ringförmigen oberen Abschnitt (T) umfasst, der im Wesentlichen die gleiche äußere Krümmung wie der Deckel (3) aufweist.

15. Deckel (3) mit Trägermitteln (11) und Versch7ussmitteln (5) zur Verwendung in einem Behältnis (1) gemäß die Gegenstand von einem der Ansprüche 1 bis 14.
